(19) **Europäisches Patentamt**
**European Patent Office**
**Office européen des brevets**

(11) **EP 3 478 982 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(21) Anmeldenummer: **17725967.8**

(22) Anmeldetag: **29.05.2017**

(51) Int Cl.:
**F16D 48/08** (2006.01)

(86) Internationale Anmeldenummer:
**PCT/EP2017/062832**

(87) Internationale Veröffentlichungsnummer:
**WO 2018/001659 (04.01.2018 Gazette 2018/01)**

(54) **VERFAHREN ZUR ÜBERTRAGUNG UND DÄMPFUNG VON DREHMOMENTEN**

METHOD FOR TRANSMITTING AND DAMPING TORQUES

PROCÉDÉ POUR TRANSMETTRE ET AMORTIR DES COUPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2016 DE 102016211958**

(43) Veröffentlichungstag der Anmeldung:
**08.05.2019 Patentblatt 2019/19**

(73) Patentinhaber: **ZF Friedrichshafen AG**
**88046 Friedrichshafen (DE)**

(72) Erfinder:
- **HÖCHE, Tobias**
  **97461 Hofheim i. UFr. (DE)**
- **DIECKHOFF, Tobias**
  **97078 Würzburg (DE)**
- **LORENZ, Daniel**
  **97688 Bad Kissingen (DE)**
- **ORLAMÜNDER, Andreas**
  **97453 Schonungen (DE)**
- **HOFFELNER, Ingrid**
  **97478 Knetzgau (DE)**
- **GROSSPIETSCH, Wolfgang**
  **97422 Schweinfurt (DE)**
- **MATSCHAS, Steffen**
  **97708 Bad Bocklet-Aschach (DE)**

- **FRIESS, Johannes**
  **97513 Michelau im Steigerwald (DE)**
- **EBERT, Christofer**
  **97840 Hafenlohr (DE)**
- **KRAM, Matthias**
  **97080 Würzburg (DE)**
- **EGLER, Dennis**
  **34314 Espenau (DE)**
- **ROHM, Axel**
  **97453 Schonungen (DE)**
- **WACK, Erwin**
  **97464 Niederwerrn (DE)**
- **UNSELD, Bernd**
  **88213 Ravensburg (DE)**
- **DÖGEL, Thomas**
  **97720 Nüdlingen (DE)**
- **REISCH, Matthias**
  **88214 Ravensburg (DE)**
- **SASSE, Christoph**
  **97422 Schweinfurt (DE)**
- **KOPP, Mathias**
  **96050 Bamberg (DE)**

(56) Entgegenhaltungen:
**DE-A1- 19 612 455          DE-A1-102008 009 135**
**DE-A1-102013 204 698**

EP 3 478 982 B1

**Beschreibung**

Vorliegende Erfindung betrifft ein Verfahren zur Übertragung und zur Dämpfung eines mittleren Drehmomentes mit einem überlagerten Wechselmoment in einer Drehmomentübertragungsanordnung für den Antriebstrang eines Kraftfahrzeugs mit einem Eingangsbereich, und einem nachfolgendem Ausgangsbereich.

Aus dem Stand der Technik der DE 10 2008 009 135 A1 ist ein solches Verfahren bei einer Drehmomentübertragungsanordnung für den Antriebstrang eines Kraftfahrzeuges bekannt, bei dem zwischen einem Verbrennungsmotor und einem Wechselgetriebe eine Reibungskupplung vorgesehen ist, und wobei die Reibungskupplung so angesteuert wird, dass eine an der Reibungskupplung anliegende Drehzahldifferenz einer Resonanzdrehzahlbreite beim Anfahren verringert wird, im Vergleich ohne Ansteuerung.

Nachteilig an diesem Verfahren aus dem Stand der Technik, dass mit diesem Verfahren nur der Anfahrvorgang und das durch den Anfahrvorgang bekannte Rupfen verringert werden soll. Dieses Verfahren besitzt jedoch nicht die Leistungsfähigkeit, Drehschwingungen, die durch den Verbrennungsmotor verursacht werden, zu dämpfen, die bei einem permanenten Fahrzustand auftreten.

Aufgabe vorliegender Erfindung ist es deshalb, ein Verfahren zur Drehschwingungsreduzierung einer Drehmomentübertragungsvorrichtung bereitzustellen, die vor allem nach dem Anfahrvorgang eine vorteilhafte, Drehschwingungsreduzierung bewirkt.

Diese Aufgabe wird durch die Merkmale des unabhängigen Patentanspruches 1 gelöst.

Dabei handelt es sich um ein Verfahren zur Übertragung und zur Dämpfung eines mittleren Drehmomentes mit einem überlagerten Wechselmoment , in einer Drehmomentübertragungsanordnung für einen Antriebsstrang eines Kraftfahrzeugs, umfassend einen um eine Drehachse (A) drehbaren Eingangsbereich und einen um eine Dreh-achse (B) drehbaren Ausgangsbereich, wobei das mittlere Drehmoment mit dem überlagerten Wechselmoment entlang eines Drehmomentweges von dem Eingangsbereich zu dem Ausgangsbereich übertragen wird, wobei der Eingangsbereich der Drehmomentübertragungsanordnung mit einer Eingangsdrehzahl um die Drehachse (A) und der Ausgangsbereich der Drehmomentübertragungsanordnung mit einer Ausgangsdrehzahl um die Drehachse (B) rotiert, wobei sich zumindest die Eingangsdrehzahl aus einer mittleren Drehzahl und einem überlagerten Wechselanteil zusammensetzt, wobei der Wechselanteil näherungsweise durch eine Überlagerung periodischer Drehzahlschwingungen beschrieben werden kann, deren Frequenzen im We-sentlichen in einem ganzzahligen Verhältnis zur Zündfrequenz stehen, wobei jede dieser periodischen Schwingungen ein Minimum und ein Maximum aufweist, wobei eine Schlupfanordnung im Drehmomentweg zwischen dem Eingangsbereich und dem Ausgangsbereich zur Übertragung des mittleren Drehmomentes mit dem überlagerten Wechsel-moment und zur Erzeugung eines Drehzahlschlupfes zwischen der Drehzahl ne und der Drehzahl na im Drehmomentweg vorgesehen ist, wobei die Schlupfanordnung im Bereich der Maxima zumindest eines periodischen Schwingungsanteils des Wechselanteils ein Maximum einer ex-ternen Aktivierung des Drehzahlschlupfes und im Bereich der Minima zu-mindest eines periodischen Schwingungsanteils des Wechselanteils ein Minimum einer externen Aktivierung des Drehzahlschlupfes vorsieht. Dabei kann zwischen dem Eingangsbereich und dem Ausgangsbereich und vor der Schlupfanordnung noch weitere Drehschwingungsdämpfungseinheiten wie beispielsweise ein erster und/oder ein zweiter Federsatz sowie eine Tilgereinheit vorgeschalten werden. Dies ist besonders vorteilhaft, da die Wechselmomente, die von dem Eingangsbereich beispielsweise einen Verbrennungsmotor kommen, vorgefiltert werden. Die Schlupfanordnung zielt dabei darauf ab, die verbleibenden restlichen Wechselmomente zu reduzieren, im optimalen Falle sogar auf "Null" zu setzen. Um dies zu erreichen sieht das erfindungsgemäße Verfahren vor, dass für den Fall, dass im Bereich eines Maximums einer periodischen Schwingung des überlagerten Wechselmoments eine maximale externe Aktivierung der Schlupfanordnung erfolgt, mehr Schlupf zuzulassen, und im Bereich eines Minimums einer periodischen Schwingung des überlagerten Wechselmoments eine minimale externe Aktivierung der Schlupfanordnung erfolgt, weniger Schlupf zuzulassen. Dies bedeutet, dass die Schlupfanordnung, die beispielsweise von einer Schlupfkupplung, beispielsweise einer Lamellenkupplung, gebildet werden kann von der externen Aktivierung ein hydraulisches Signal erhält in der Form eines niedrigeren hydraulischen Drucks, was eine Verringerung einer Anpresskraft auf die Lamellenkupplung zur Folge haben kann und sich somit eine Schlupferhöhung sprich eine Vergrößerung der Drehzahldifferenz ergibt. Für den Fall der Schlupfreduzierung soll die externe Aktivierung ein hydraulisches Signal zu der Schlupfkupplung in der Form geben, dass hier ein hydraulischer Druck erhöht wird und somit die Anpresskraft auf die Schlupfkupplung ebenfalls erhöht wird, was zu einer Schlupfreduzierung in der Schlupfkupplung zur Folge hat. Hierdurch kann dem Maximum im überlagerten Wechselmoment entgegengewirkt werden. Die externe Aktivierung zur Erzielung der Schlupfreduzierung bzw. der Schlupferhöhung kann auch als Schlupfmodulation bezeichnet werden. Dabei ist die Frequenz der Schlupfmodulation abhängig von der Verwendung des Antriebsaggregates beispielsweise des Verbrennungsmotors. Bei der Verwendung einer Viertakt-Verbrennungsmotors ist ein Frequenzbereich von 23 Hertz bis 60 Hertz, bei der Verwendung eines Vierzylinder-Taktmotors die Verwendung eines Frequenzbereiches von circa 33 bis 66 Hertz, und bei der Verwendung eines Sechszylinder-Viertakt-Verbrennungsmotors die Verwendung eines Frequenzbereiches von 50 bis 100 Hertz vorteilhaft.

Eine weitere vorteilhafte Ausführungsform sieht vor, die externe Aktivierung der Schlupfanordnung von einem hydraulischen Aggregat erfolgt. Hierbei kann beispielsweise für den Fall, dass die Schlupfanordnung als eine Reibscheibenkupplung ausgeführt ist, das hydraulische Ausrücksystem hierfür genutzt werden, was kostengünstig ist.

Auch kann es vorteilhaft sein, wenn die externe Aktivierung der Schlupfanordnung von einem elektrischen Aggregat erfolgt. Dabei kann dies rein elektrisch erfolgen, oder auch elektromagnetisch.

Eine weiter günstige Variante sieht vor, dass die externe Aktivierung geeignet ist, an der Schlupfanordnung einen Modulationsbereich von 23 bis 50 Hz oder einen Bereich von 33 bis 66 Hz oder einen Bereich von 50 bis 100 Hz vorzusehen.

Auch kann es günstig sein, dass die Schlupfanordnung als ein Anfahrelement verwendet wird. Dies spart weitere Bauteile und ist somit kostensparend.

Aber es kann auch zusätzlich zu der Schlupfanordnung ein Anfahrelement vorgesehen sein. Hierbei kann die Schlupfanordnung explizit auf die Funktion des optimalen Schlupfes ausgelegt werden, ohne, dass auch Anfahrsituationen von der Schlupfkupplung übernommen werden müssen.

Eine weitere günstige Ausgestaltung sieht vor, dass die Schlupfanordnung und/ oder das Anfahrelement als eine Reibkupplung, oder als eine Lamellenkupplung, oder als eine hydrodynamische Kupplung, oder als eine Trennkupplung in Hybridantrieben, oder als eine Doppelkupplung oder eine Triplekupplung ausgeführt, oder als eine Kupplung oder Bremse in Verbindung mit einem Planetengetriebe ausgeführt ist.

Weiter kann die Drehachse (A) und die Drehachse (B) koaxial verlaufen oder versetzt zueinander. Besonders bei Fahrzeugen mit Heckantrieb und längs eingebauten Frontmotor liegen die beiden Drehachsen (A) und (B) zueinander koaxial. Bei einem Frontantrieb mit quer eingebautem Motor liegt meist die Drehachse (A) zu der Drehachse (B) versetzt.

Im Folgenden soll die Erfindung anhand von Darstellungen näher erläutert werden. Dabei stellen die in den Zeichnungen dargestellten Ausführungsbeispiele lediglich bevorzugte Ausführungen dar und sollen nicht den Rahmen der Erfindung festlegen. Dieser wird allein durch die anhängigen Ansprüche definiert.

Es zeigen in

Figur 1:     eine schematische Darstellung eines Antriebsstranges als Stand der Technik
Figur 2 :     vorteilhafte schematische Darstellung eines Antriebsstranges
Figur 3:     Diagramm eines umgelenkten Momentenverlaufs
Figur 4:     vorteilhafte schematische Darstellung eines Antriebsstranges
Figur 5:     Vorzugstopologie schematisch
Figur 6:     Prinzipschaltbild einer Schlupfkupplung
Figur 7:     Diagramm eines umgelenkten Momentenverlaufs
Figur 8:     Diagramm Schlupfdrehzahl über Zeit
Figur 9:     Diagramm Reibkoeffizient über Schlupfdrehzahl
Figur 10:     Diagramm Reibkoeffizient über Zeit
Figur 11:     Diagramm Sinusverlauf von Fa
Figur 12:     Diagramm Trapezverlauf von Fa
Figur 13:     Diagramm Sinusverlauf von Fa mit höherer Ordnung
Figur 14:     weitere Diagramme
Figur 15:     Diagramm Eingangsdrehzahl an der Schlupfanordnung in einem Betriebspunkt.
Figur 16:     Diagramm Reibwertverlauf über Schlupf

Im Folgenden werden gleiche oder funktionell gleichwirkenden Bauteile mit den gleichen Bezugszeichen bezeichnet.

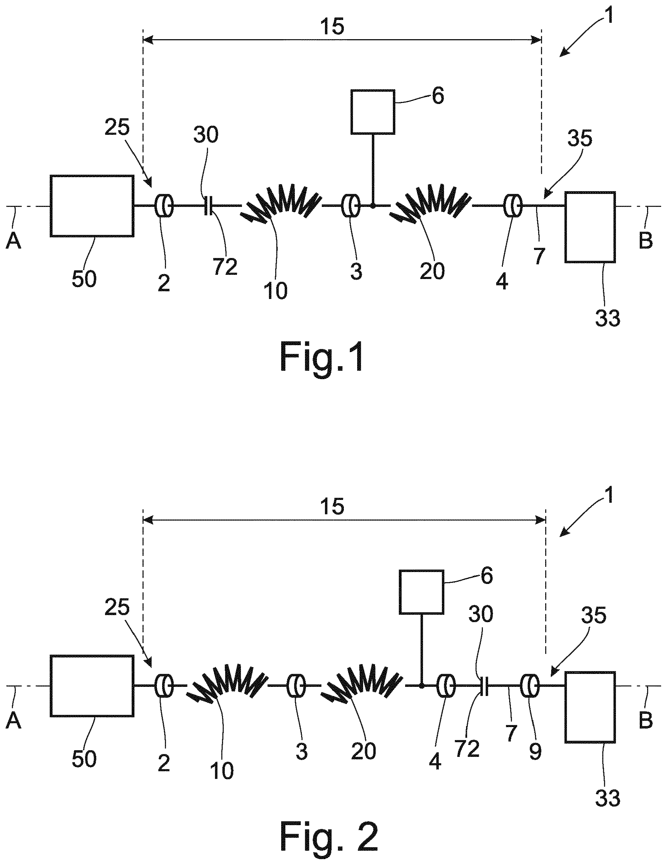

Vorab zu der Figur 1 ist zu erwähnen, dass heutige Drehschwingungsentkopplungssysteme für PKWs neben Feder-Masse-Anordnungen, beispielsweise ZMS, auch drehzahladaptive Tilger vorsehen. Zudem kann und wird, zumindest in Antriebssträngen mit nasslaufendem Anfahrelement, über einen Schlupf im Anfahrelement eine Reduzierung der Drehmomentschwankungen des Verbrennungsmotors durchgeführt. Die hier zum Einsatz kommende Technik, bei der ein Schlupfregler eine vorgegebene mittlere Schlupfdrehzahl einstellt, wird im Folgenden als "aktiver Schlupf Mode 1" bezeichnet. Nachfolgend wird ein Verfahren zur Ansteuerung einer Kupplung in einem PKW-Antriebsstrang vorgestellt, welches als "aktiver Schlupf Mode 2" bezeichnet wird und insbesondere ermöglichen soll, dass bei gleicher mittlerer Schlupfdrehzahl und somit den gleichen Reibungsverlusten eine deutlich bessere Entkopplung zu erreichen ist als bei einer schlupfende Kupplung nach dem Stand der Technik, oder zumindest ein gleichwertiges Entkopplungsniveau wie konventionelle Systeme bei Verwendung leichterer und kostengünstigerer Komponenten für die Vorentkopplung, beispielsweise Federsätze und Tilger.

Die Figur 1 zeigt eine Drehmomentübertragungsanordnungl in einem automatisiertes Antriebstrang eines Kraftfahrzeuges nach Stand der Technik, welcher eine Drehschwingungsdämpfunsgeinheit 15 mit drehzahladaptivem Tilger 6 enthält. Dabei sind die relevanten Massen, Steifigkeiten und das Anfahrelement, folgendermaßen angeordnet, wobei die Darstellung nur bis einschließlich Getriebe erfolgt. Der Restantriebsstrang ist ausgeblendet. Eine Wandlerüberbrückungskupplung 72 ist am Eingangsbereich 25 der Drehschwingungsdämpfunseinheit 15 angeordnet.

Der drehzahladaptivem Tilger 6 ist an einer Zwischenmasse 3 zwischen einem ersten Federsatz 10 und einem zweiten Federsatz 20 platziert. Diese Topologie weist folgende Nachteile in Bezug auf die Drehschwingungsentkopplung auf.

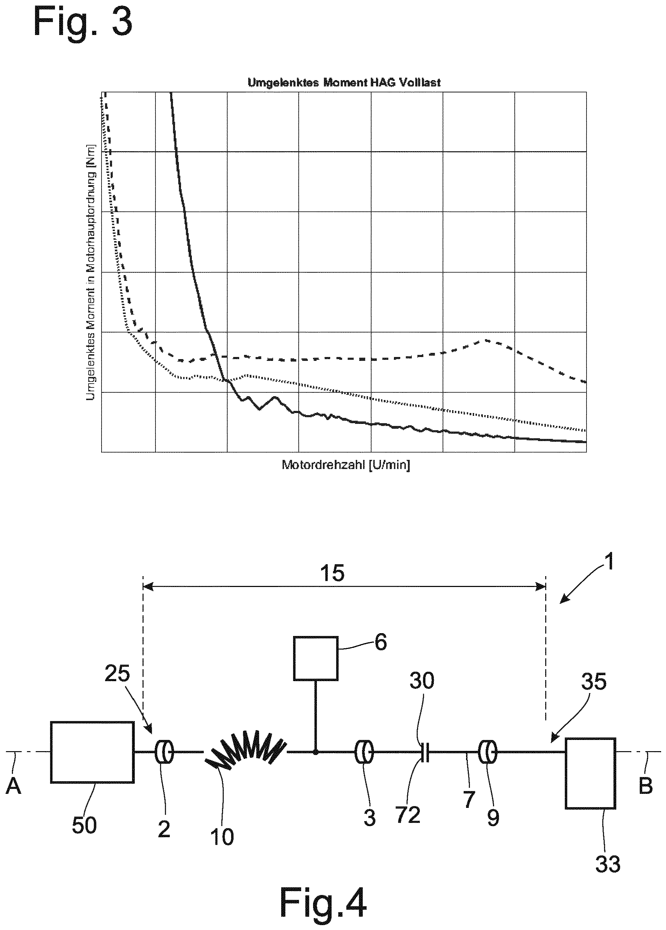

Wird die Wandlerüberbrückungskupplung 72 mit einem Kupplungsschlupf betrieben, verringert dies die Drehmomentschwankungen, welche in die Drehmomentübertragungsanordnungl geleitet werden. Dadurch, dass die Drehzahl der Komponenten auf der Ausgangsseite der Wandlerüberbrückungskupplung 72, und somit auch die des Tilgers 6, um die eingeregelte Schlupfdrehzahl niedriger ist als beispielsweise eine Motordrehzahl des Antriebsaggregates 50, stimmt die Abstimmung des Tilgers 6 auf die Motorordnung nicht mehr, so dass dieser mit zunehmendem Schlupf immer schlechter arbeitet. Die Aufgabe des zweiten Federsatzes 20 ist es, eine Federsteifigkeit zwischen der relativ hohen Massenträgheit des Tilgers 6 und dem ebenfalls relativ schweren Getriebe 33 darzustellen. Würde der Tilger 6 direkt auf einer Getriebeeingangswelle 100 angebunden sein, hätte dies bei den üblicherweise vorliegenden Trägheitsmomenten und Wellensteifigkeiten zur Folge, dass sich sogenannte Schwingungsknoten ausbilden. Dies bedeutet, dass bei bestimmten, auch gangabhängigen Drehzahlen, der Tilger im Schwingungssystem keine Anregung erfährt und somit kein Reaktionsmoment aufstellen und folglich nicht zur Drehungleichförmigkeitsentkopplung beitragen kann. Dies äußert sich dann bei der entsprechenden Drehzahl durch eine deutliche Erhöhung der verbleibenden Drehungleichförmigkeit , vergleiche auch in der Figur 3, die gestrichelte Linie im oberer Drehzahlbereich. Mit der bestehenden Topologie wird dies zwar verhindert, allerdings kann sich durch das relativ hohe Massenträgheitsmoment der Zwischenmasse 3 und des Tilgers 6, im Zusammenwirken mit den Steifigkeiten der Federsätze 10 und 20, eine in Bezug auf die Drehungleichförmigkeitsentkopplung ungünstige Zwischenmassen-Resonanz ausbilden.

Die Figur 2 zeigt eine günstigere Topologie der Komponenten, die auch in der Figur 1 gezeigt wurden. Diese zeichnet sich dadurch aus, dass der zweite Federsatz 20 primärseitig zum Tilger 6 angeordnet ist, wodurch sich folgende Vorteile ergeben. Zum einen wird durch eine verringerte Summensteifigkeit der beiden in Reihe geschalteten Federsätze 10 und 20 eine Vorentkopplung vor dem Tilger 6 verbessert, so dass dieser kleiner ausgeführt werden kann und das System bereits bei niedrigerer Drehzahl überkritisch arbeitet, gut zu sehen in der Figur 3, die gestrichelte und gepunktete Linie. Weiter fällt die Zwischenmasse 3 ohne die Anbindung an den Tilger 6 deutlich kleiner aus, so dass keine störende Zwischenmassenresonanz im Betriebsbereich entstehen.Weiter ist die Wandlerüberbrückungskupplung 72 auf der Ausgangsseite der Drehmomentübertragungsanordnung 1 angeordnet, zwischen dem Tilger 6 und dem Getriebe 33. Dies ist vorteilhaft, da durch den Kupplungsschlupf die Ordnungsabstimmung des Tilgers 6 nicht beeinträchtigt wird. Auch wird durch den Kupplungsschlupf der Wandlerüberbrückungskupplung 72 die Ausbildung der oben beschriebenen Schwingungsknoten reduziert bzw. verhindert, wie in der Figur 3 mit der gepunkteten Linie gezeigt.

Die in der Figur 2 dargestellte Anordnung verwendet aus Gründen der besseren Vergleichbarkeit prinzipiell die gleiche schematische Ausführung von und Anzahl an Unterbaugruppen, insbesondere Federsätzen, wie in der Figur 1 beschrieben.

Dies ist allerdings nur exemplarisch zu verstehen. Funktionell sind beispielsweise auch andere Ausführungen des Torsionsdämpfers 10, 20 möglich, unter anderem auch als ein- oder mehrreihiges ZMS. Auch der Tilger 6 kann auf unterschiedliche Arten ausgeführt sein, wobei Konstruktionen als drehzahladaptiver Tilger nach dem Prinzip Sarrazin, Salomon oder DFTvar besonders vorteilhaft sind.

Die Figur 3 zeigt das umgelenkte Moment über die Drehzahl von einem Drehmomentübertragungssystem nach dem Stand der Technik, eine Variante ohne Schlupf und eine Variante mit Schlupf Mode 2.

Die Figur 4 zeigt eine weitere Topologieanordnung, wie bereits in den Figuren 1 und 2 beschrieben, jedoch mit nur einem Federsatz 10, hier als ein Zweimassenschwungrad mit einem einreihigen Federsatz.

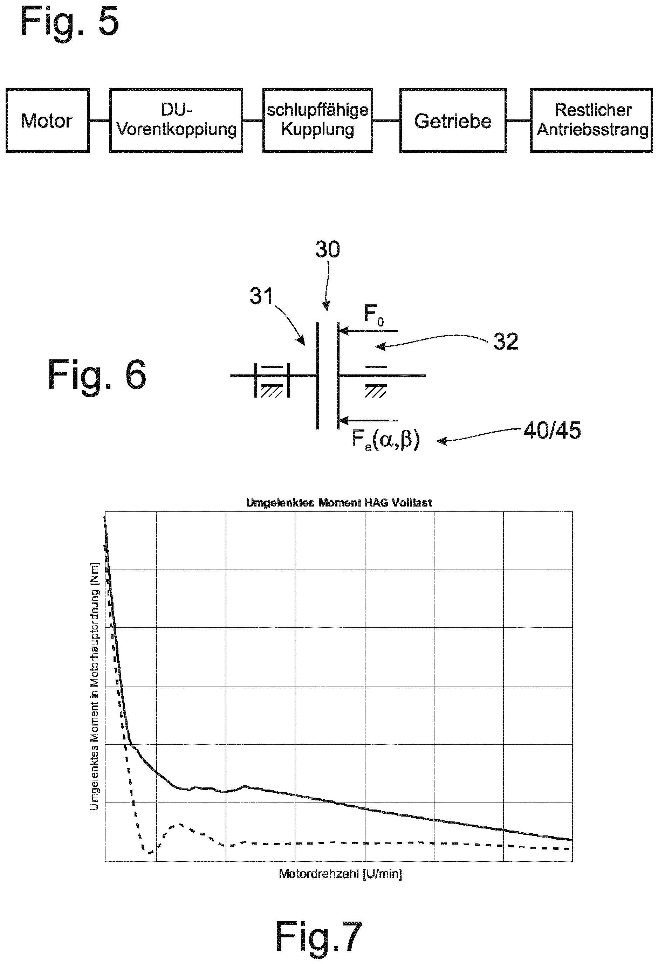

Die Figur 5 zeigt eine Vorteilhafte Topologie zur Drehschwingungsreduzierung im Antriebsstrang. Drehungleichförmigkeitsvorentkopplung bezeichnet in diesem Sinn ein System, welches die Drehungleichförmigkeit vor der schlupffähigen Kupplung 30 reduziert. Dieses kann wie im konkreten Beispiel oben aus einer Anordnung aus Torsionsfedern, Massen und Tilgern bestehen. Es sind jedoch auch andere Prinzipien möglich, wie beispielsweise eine Drehungleichförmigkeitsentkopplung mit zwei parallelen Drehmomentübertragungswegen und einer Kopplungsanordnung, ein Gasfeder-Torsionsdämpfer oder eine Anordnung mit Fliehkraft-Federn.

Bei der geforderten schlupffähigen Kupplung 30 kann es sich gleichzeitig auch um eine Anfahrkupplung handeln. Dies ist aber nicht zwingend notwendig. Die Anfahrkupplung kann ansonsten an einer anderen, beliebigen Position des Antriebsstrangs platziert sein. Genauso kann es sich bei der schlupffähigen Kupplung aber auch um eine oder auch mehrere Kupplungen des Getriebes handeln, die je Gang, Aufgaben bei der Getriebeschaltung und/oder der Drehungleichförmigkeitsentkopplung durch Schlupf lösen. Die Art des Getriebes, beispielsweise als ein Automatgetriebe (AT), Doppelkupplungsgetriebe (DCT), automatisiertes Schaltgetriebe (ASG), Stufenlosgetriebe oder manuelles Getriebe (MT) und die Ausführung des Antriebsstrangs als Front- Heck- oder Allrad-Antrieb, auch in hybridisierter Bauart, sind beliebig. Insbesondere bei MT- und DCT-Getrieben ist die beschriebene Topologie bereits Standard, in Kombination mit AT-Getrieben jedoch nicht. Allerdings ist insbesondere bei MT-Getrieben, aber auch bei trockenlaufenden DCT-Getrieben die dort eingesetzte Anfahrkupplung nicht geeignet, auf Dauer durch Schlupf eine Funktion zur Drehungleichförmigkeitsentkopplung einzunehmen. Insofern ist auch für diese Antriebsstränge der vorgeschlagene Aufbau neu.

Die Figur 6 zeigt vereinfacht ein Prinzipschaltbild einer schlupffähigen Kupplung 30 nach einem verbessertes Verfahren, dem Kupplungsschlupf Mode 2.

Mit der bereits beschriebenen Topologie kann bei gleichen Steifigkeitswerten des Federsatzes 10, 20 bereits bei niedriger Drehzahl eine deutlich verbesserte Entkopplung erreicht werden und bereits Kupplungsschlupf Mode 1 wirkt effektiv zur weiteren Verbesserung der Entkopplung bzw. zur Vermeidung von Schwingungsknoten. Allerdings führt der Kupplungsschlupf generell zu Reibungsverlusten, welche bei hohem Motormoment und hoher Schlupfdrehzahl inakzeptable Werte annehmen können. Begrenzend wirken hier der steigende Kraftstoffverbrauch und somit CO2-Ausstoß sowie die erzeugte Reibungswärme, welche abgeführt werden muss.

Ziel der vorliegenden Erfindung ist es, bei niedriger Schlupfdrehzahl die Entkopplungswirkung des Schlupfes zu steigern.

Dies wird dadurch erreicht, dass das von der Kupplung übertragbare Moment aktiv moduliert wird. Dieses Verfahren wird daher aktiver Schlupf Mode 2 genannt.

Dabei ist F0 eine Kraft, welche von einem Schlupfregler eingeregelt wird, um eine bestimmte mittlere Drehzahldifferenz zwischen einer Eingangsseite 31 der Schlupfanordnung 30 und einer Ausgangsseite 32 der Schlupfanordnung 30 zu erreichen. In einem stationären Betriebspunkt kann F0 als konstant angesehen werden.

Das übertragbare Moment der Schlupfkupplung 30 berechnet sich so weit zu

$$M\_üb = F\_0 \cdot r \cdot \mu(n\_Schlupf)$$

mit

 r = mittlerer Reibradius
 $\mu$ = Reibwert der Kupplungsbeläge, welcher von der
 Schlupfdrehzahl n_Schlupf abhängt.

$Fa(\alpha,)$ ist eine zusätzliche Kraft, deren Amplitude in Abhängigkeit von einem Bezugswinkel $\alpha$ und einer Phasenverschiebung $\beta$ verläuft.
Die Abhängigkeit kann beispielsweise über eine Sinusfunktion gegeben sein.
Als Bezugswinkel kommt beispielsweise die Kurbelwellen-Stellung in Frage. Für eine Abstimmung auf die Haupt-Motorordnung bei einem 4-Zylinder 4-Takt-Motor würde dies bedeuten:

$$F\_a(\alpha,\beta) = F\_a \cdot \sin(2a+\beta)$$

Das übertragbare Moment berechnet sich damit wie folgt:

$$M\_üb = [[F]\_0 + F\_a \cdot \sin(2a+\beta)] \cdot r \cdot \mu(n\_Schlupf)$$

In der Figur 7 ist zu sehen, welchen Effekt die Modulation des Kupplungsmoments auf die Drehschwingungsentkopplung der Motor-Hauptordnung bewirkt. Verglichen mit Schlupf Mode 1 wird durch den Schlupf Mode 2 die Drehungleichförmigkeit noch einmal deutlich verringert, und das bei gleicher mittlerer Schlupfdrehzahl und entsprechend gleichen Reibungsverlusten.

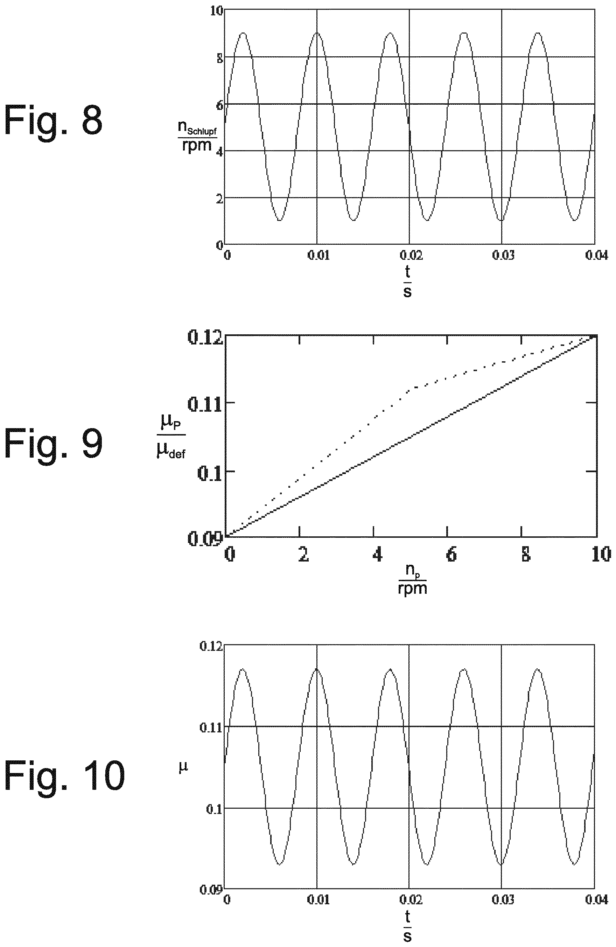

Die Figuren 8, 9 und 10 verdeutlichen die Herleitung der Funktionsweise des aktiven Schlupfes Mode 2. Aufgrund von nichtlinearen Zusammenhängen und der nichtharmonischen Anregung im realen Antriebsstrang, lässt sich die Wirkungsweise der Modulation des übertragbaren Kupplungsmoments in Bezug auf die DU-Entkopplung nur unter stark vereinfachten Bedingungen anschaulich herleiten.

Hierzu wird eine in der Hauptordnung, hier die 1. Motorordnung, eine rein sinusförmige Drehungleichförmigkeit an der Eingangsseite der Kupplung angenommen. Mit einer konstanten Kupplungskraft F0 stellt sich in diesem Beispiel dann ein mittlerer Schlupf von 5 rpm ein, welcher mit einer Amplitude von 4 rpm um den Mittelwert schwingt, vergleiche die Figur 8.

Der Verlauf des Reibwertes der Schlupfkupplung über den Schlupf wird in diesem Bereich linearisiert, dargestellt mit der durchgezogene Linie, in der Figur 9.

Somit ergibt sich auch für den Reibwert ein sinusförmiger Verlauf über der Zeit, zu sehen in der Figur 10. Der mittlere Reibwert beträgt hier $\mu\_0 = 0.105$ und die Amplitude $\mu\_a = 0.012$.

Für das übertragbare Moment gilt bei Modulation in Hauptordnung wiederum:

$$M\_üb = [[F]\_0 + F\_a \cdot \sin\ (a+\beta)] \cdot r \cdot [\mu\_0 + \mu\_a \cdot \sin\ (\alpha)\ ]$$

Der Winkel $\alpha$ berechnet sich hierbei zu $\alpha = 2 \cdot \pi \cdot n \cdot t$ mit n=Drehzahl t=Zeit

Mit einer optimalen Phasenverschiebung $\beta$=180°=$\pi$ folgt sin $(\alpha+\pi)$=-sin $(\alpha)$ Durch Ausmultiplizieren von M_üb:

$$M\_üb = r \cdot [F\_0\ \mu\_0 + (F\_0\ \mu\_a - F\_a\ \mu\_0)\ \sin\ (\alpha) - F\_a\ \mu\_a\ \sin^2\ [(\alpha)]\ ]$$

Mit $\sin^2\ [(\alpha)] = 1/2(1 - \cos\ (2\alpha)])$ folgt:

$$M\_üb = r \cdot [[(F]\_0\ \mu\_0 - (F\_a\ \mu\_a)/2) + (F\_0\ \mu\_a - F\_a\ \mu\_0)\ \sin\ (\alpha) + (F\_a\ \mu\_a)/2$$

$$\cos\ (2\alpha)]$$

Die Summanden in der eckigen Klammer dieses Terms lassen sich unterschiedlichen Ordnungen zuweisen:

0. Ordnung: F_0 $\mu$_0-(F_a $\mu$_a)/2
mittleres Moment
Um das gleiche mittlere übertragbare Moment zu erhalten, sind für unterschiedliche Subtrahenden (F_a $\mu$_a)/2 unterschiedliche Kräfte F_0 notwendig (wird durch Schlupfregler nachgeregelt).

1. Ordnung: (F_0 $\mu$_a-F_a $\mu$_0) sin (a)
Hauptordnung in diesem Beispiel
Lässt sich unter den vereinfachten Annahmen bei Wahl von F_a=(F_0 $\mu$_a)/$\mu$_0 komplett auslöschen! □ Hierin ist der Effekt der Erfindung begründet!

2. Ordnung: (F_a $\mu$_a)/2 cos (2a)
Durch die Modulation entsteht eine neue Ordnung mit doppelter Modulationsfrequenz.
Die Amplitude dieser Ordnung ist jedoch vergleichsweise gering und zudem werden höhere Ordnungen vom Antriebsstrang besser gedämpft als niedrige, so dass der positive Effekt der Reduzierung der Hauptordnung überwiegt.

Es handelt sich bei dieser Herleitung um ein stark vereinfachtes Modell. Aufgrund der abweichenden Bedingungen in der Realität, ist zwar mit diesem Verfahren praktisch keine vollständige Auslöschung der Haupt-Motorordnung möglich, jedoch eine deutliche Reduzierung, wie in der Figur 7 zu sehen ist.

Dabei wird die Die Funktion des Kupplungsschlupfes mit aktiver Modulation, also Kupplungsschlupf Mode 2, durch folgende Parameter bestimmt.

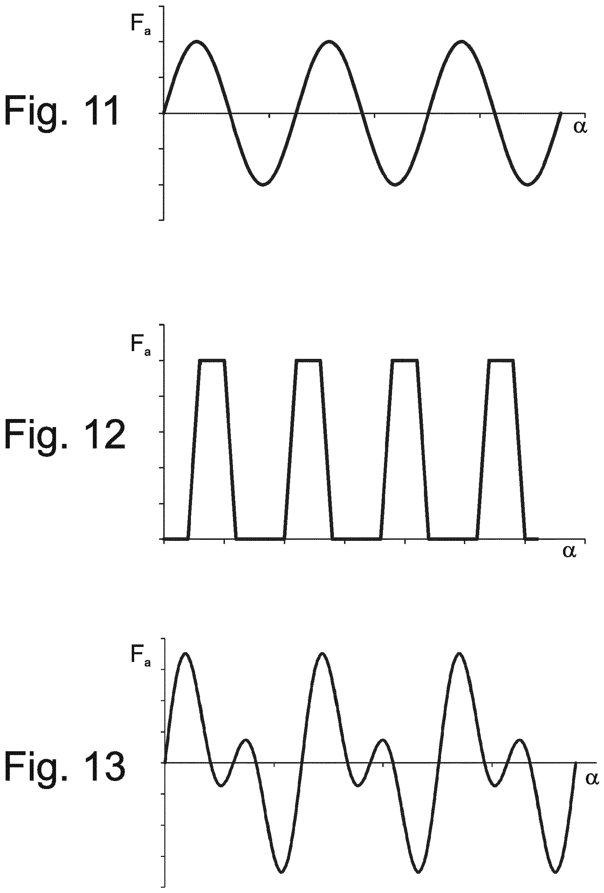

Zum einen ist die die Schwingungsform. Der optimale Verlauf des übertragbaren Kupplungsmoments über der Zeit hängt vom Verlauf der Drehungleichförmigkeit der Hauptordnung am Kupplungseingang ab. Im vorangegangenen Beispiel war die angenommene Anregung rein sinusförmig und der optimale Verlauf der modulierten Kupplungskraft ebenfalls. In einem realen Antriebsstrang hat die bereits vorentkoppelte Hauptordnung des Wechselmoments am Kupplungseingang einen zumindest näherungsweise sinusförmigen Verlauf, so dass auch hier die Modulation des Kupplungsmoments über eine Sinusfunktion beschrieben werden kann, um gute Ergebnisse zu erreichen, zu sehen in der Figur 11. Es können jedoch auch andere harmonische sowie nichtharmonische Funktionen zugrunde gelegt werden, wie beispielsweise ein trapezförmiger Verlauf, zu sehen in der Figur 12. Ebenso kann die Schwingungsform darauf optimiert werden, mehrere Motorordnungen zu reduzieren. In einem einfachen Fall ist dies dadurch möglich, dass die Modulation durch eine Überlagerung zweier Sinusschwingungen beschrieben wird, wobei die eine Sinusschwingung beispielsweise die Zündfrequenz und die andere die doppelte Zündfrequenz aufweist.

Die Aufteilung der Betätigungskraft der Kupplung in eine über den Schlupfregler vorgegebene, im stationären Betriebspunkt konstante Kraft F0, und eine dynamische Kraft Fa zur Modulation des übertragbaren Moments, ist jedoch vornehmlich ein Gedankenmodell zur Beschreibung des Wirkprinzips der Erfindung. Es ist Sache der konstruktiven Umsetzung, ob tatsächlich zwei Kräfte überlagert werden, z.B. im Sinne von zwei separaten Aktoren, ob die Kraft, welche ein einzelner Aktor auf die Kupplung aufbringt, entsprechend variiert wird, oder ob Mischformen eingesetzt werden.

Entscheidend für das Verfahren ist lediglich, dass das übertragbare Moment der Kupplung in einer geeigneten Form und mit geeigneten Parametern dynamisch verändert wird. Für eine Abstimmung auf die Haupt-Motorordnung muss die Modulationsfrequenz der Zündfrequenz des Verbrennungsmotors entsprechen. Somit steigt sie in Abhängigkeit zur Motordrehzahl an. Für einen 3-Zylinder 4-Takt-Motor ergibt sich beispielsweise für den Drehzahlbereich von 1000 bis 2000 rpm eine notwendige Modulationsfrequenz von 25 bis 50 Hz. Bei Motoren mit Zylinderabschaltung ist es besonders vorteilhaft, wenn die Regelung der Schlupfbetätigung eine Umschaltung zwischen den Ordnungen des Voll- und Abschaltbetriebs ermöglicht. Ebenso ist eine Auslegung auf höhere Ordnungen, bzw. eine kombinierte Auslegung auf mehrere Ordnungen möglich.

Die optimale Phasenlage der Modulation beträgt 180° in Bezug auf die Schwingung der Eingangsdrehzahl der Schlupfanordnung, wie auch schon in der theoretische Herleitung der Funktion vorangehend beschrieben.

Besonders vorteilhaft sind Phasenverschiebungen im Bereich 180° ± 45°.

Bei zu geringer Phasenverschiebung kommt es zur einer Vergrößerung der Drehungleichförmigkeit, welche bei Phasengleichheit maximal wird.

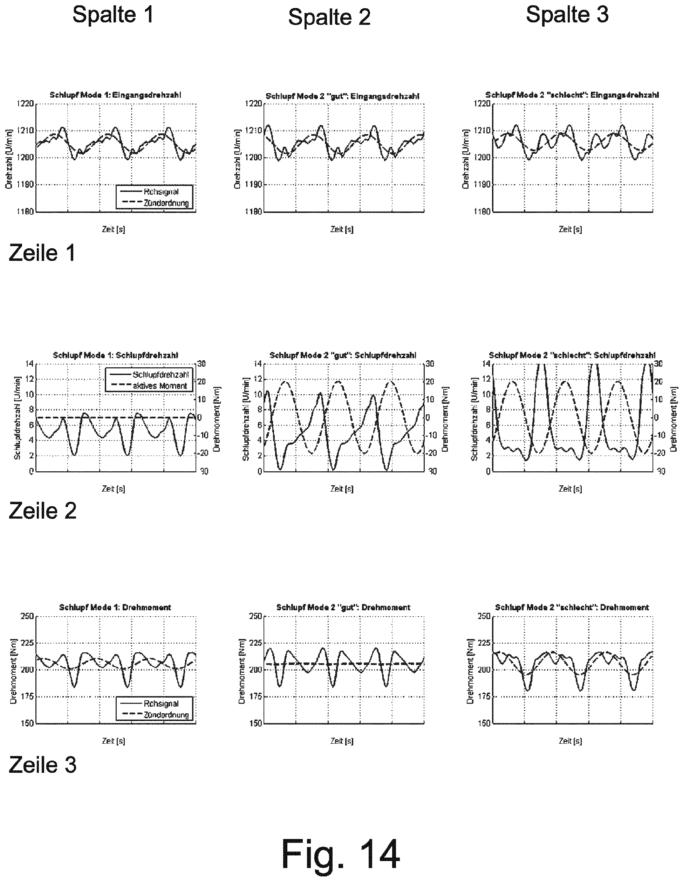

Die Figur 14 zeigt verschiedene Größen im Antriebsstrang eines Kraftfahrzeugs gemäß der Figur 4, für drei verschiedene Fälle:

   1. Spalte: Schlupf Mode 1
   2. Spalte: Schlupf Mode 2 - Phasenlage in einem günstigen Bereich
   3. Spalte: Schlupf Mode 2 - Phasenlage in einem ungünstigen Bereich

In der obersten Zeile ist jeweils die Drehzahl am Eingangsbereich 31 der Schlupfkupplung 30 dargestellt. Aufgrund der Drehungleichförmigkeit des Verbrennungsmotors schwankt die Drehzahl trotz Vorentkopplung durch beispielsweise ein ZMS und einen drehzahladaptiven Tilger 6, zu der Anordnung vergleiche die Ausführungen in den Figuren 5 und 6, um eine mittlere Drehzahl, hier ~ 1205 U/min. Der Anschaulichkeit halber ist neben dem Rohsignal auch die Schwingung der Drehzahl in Motor-Zündordnung eingezeichnet. Diese kann mittels schneller Fourier-Transformation aus dem Zeitverlauf der Gesamtschwingung ermittelt werden.

In der zweiten Zeile sind die Schlupfdrehzahl ns zwischen Eingangsseite 31 und Ausgangsseite 32 der Schlupfkupplung 30, sowie das aktive Moment Ma dargestellt. Das aktive Moment Ma ist direkt proportional zur oben aufgeführten aktiven Kraftkomponente Fa und berechnet sich zu: $M\_a = F\_a \cdot r \cdot \mu$

Beim aktiven Schlupf Mode 1 in der ersten Spalte ist die Kraft Fa und somit auch das Moment Ma gleich null. Der sich einstellende Verlauf des Schlupfes ist somit das Resultat der vom Schlupfregler eingestellten Betätigungskraft F0, um einen mittleren Schlupf (hier 5 1/min) zu erhalten, dem Verlauf der Anregung, d.h. der Drehzahl- bzw. Drehmomentschwankung an der Kupplung und dem Verlauf des Reibkoeffizienten der Kupplung über der Schlupfdrehzahl.

Beim aktiven Schlupf Mode 2 in der zweiten und dritten Spalte ist ein sinusförmiger Verlauf der Kraftkomponente Fa bzw. des aktiven Moments Ma mit einer bestimmten Amplitude und mit der Zündfrequenz des Verbrennungsmotors vorgegeben.

In der zweiten Spalte beträgt die Phasenlage des Verlaufs des aktiven Moments Ma gegenüber dem Verlauf der Drehzahl vor der Kupplung in Zündordnung im Diagramm darüber ca. 180°. Anders ausgedrückt: In den Zeitbereichen, in denen die Drehzahlschwankung in Zündordnung Minima aufweist, hat das aktive Moment Ma Maxima und umgekehrt. Dies stellt eine optimierte Abstimmung des aktiven Schlupfes Mode 2 dar.

In der dritten Spalte ist ein ungünstiger Fall dargestellt, in dem das aktive Moment in etwa phasengleich zur Drehzahl am Eingangsbereich der Kupplung verläuft.

Die Diagramme in der dritten Zeile zeigen das von der Kupplung übertragene Drehmoment, wiederum als ursprüngliches Rohsignal und als dessen Anteil in Motor-Zündordnung. Zu erkennen ist, dass mit dem aktiven Schlupf Mode 2 mit optimierter Phasenlage, siehe Spalte 2, die Ungleichförmigkeit des Moments in Motor-Hauptordnung fast vollständig geglättet wird. Mit der ungünstigen Phasenlage, siehe Spalte 3, wird die Amplitude der Momenten-Ungleichförmigkeit gegenüber dem aktiven Schlupf Mode 1, siehe Spalte 1, sogar noch erhöht.

Die Phasenlage der Modulation muss nicht exakt 180° in Bezug auf die Drehzahl am Eingang der Schlupfvorrichtung betragen um eine positive Wirkung zu erzielen. Um eine Verbesserung gegenüber dem aktiven Schlupf Mode 1 zu erreichen, ist es jedoch vorteilhaft, wenn die Phasenverschiebung im Bereich 180° ± 45° liegt.

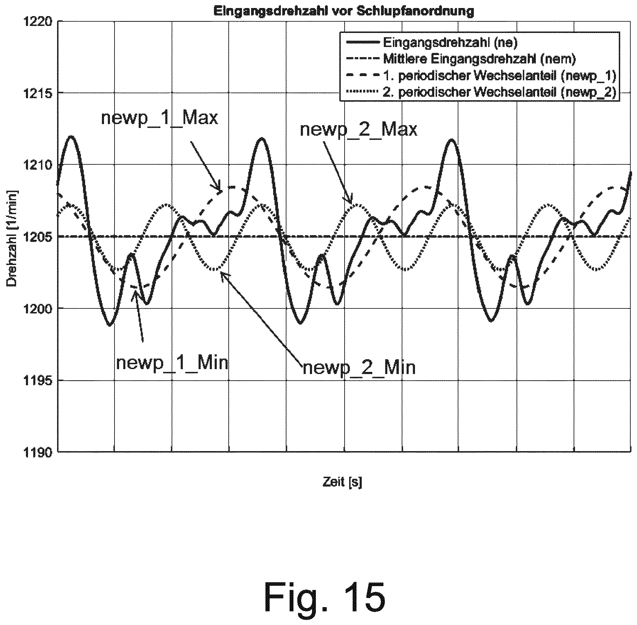

Die Figur 15 zeigt den Verlauf der Drehzahl im Eingangsbereich 31 der Schlupfanordnung 30, wie auch in der Figur 14, mittlere Spalte, obere Zeile dargestellt, für einen statischen Betriebspunkt.

Die Eingangsdrehzahl (ne) besitzt einen Mittelwert (nem), hier 1205 1/min, um welchen ein Wechselanteil (new), hier nicht eigens dargestellt, da deckungsgleich mit dem Verlauf von ne, schwingt. Der Verlauf des Wechselanteils hängt im Wesentlichen ab von der Beschaffenheit des Verbrennungsmotors 50, insbesondere der Anzahl an Zylindern, und der Vorentkopplung. Der Wechselanteil kann mittels schneller Fourier-Transformation (FFT) näherungsweise als Überlagerung sinusförmiger Schwingungen (newp_i) beschrieben werden. Die niedrigste Frequenz einer solchen periodischen Teilschwingung des Wechselanteils ist die Zündfrequenz des Motors. Die Frequenzen weiterer Harmonischer Schwingungen stehen in einem ganzzahligen Verhältnis zur Zündordnung. In einem realen Antriebsstrang können auch Schwingungsanteile mit nicht ganzzahligem Bezug zur Zündfrequenz auftreten, diese seien hier jedoch vernachlässigt. In der Figur 15 sind beispielhaft die periodischen Wechselanteile in Motor-Hauptordnung (newp_1) und in doppelter Motor-Hauptordnung (newp_2) dargestellt. Die Amplituden der Wechselanteile schwanken zwischen einem Minimum (newp_i_Min) und einem Maximum (newp_i_Max). Der Verlauf eines solchen Wechselanteils ist eine Bezugsgröße für die Phasenverschiebung $\beta$ der Modulation der Aktivierung der Schlupfanordnung um eine Reduzierung der Drehungleichförmigkeit in der entsprechenden Motorordnung zu erreichen.

Es existiert eine optimale Amplitude des aktiven Moments Ma, welche vorwiegend vom mittleren Motormoment 0. Ordnung und der mittleren Schlupfdrehzahl abhängt. Zwischen der optimalen Amplitude und dem mittleren Moment bei verschiedenen Lastzuständen besteht ein annähernd linearer Zusammenhang.

Besonders geeignet sind Amplituden der Modulation des von der Schlupfanordnung übertragbaren Moments zwischen 5 und 15% des mittleren Motormoments.

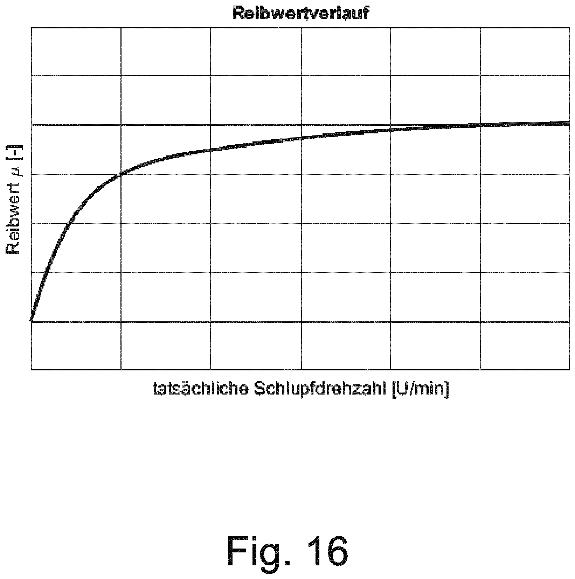

Der effektiv wirkende Reibwert, insbesondere einer nasslaufenden Reibkupplung, wie sie üblicherweise in Kraftfahrzeug-Antriebssträngen eingesetzt wird, hängt von der momentanen Differenzdrehzahl zwischen An- und Abtrieb der Kupplung ab. Üblicherweise wird der Verlauf maßgeblich durch Additive im Öl, Material und Geometrie der Beläge so angepasst, dass sich eine degressive Steigung über der Schlupfdrehzahl ergibt. Ein üblicher Reibwertverlauf ist in der Figur 16 dargestellt.

Für die hier vorgeschlagene Schlupfkupplung ist es besonders vorteilhaft, wenn der Reibwert in einem Bereich zwischen 0,05 und 0,15 liegt und bis zu einer möglichst hohen Schlupfdrehzahl steil ansteigt. Besonders günstig sind Steigungen des Reibwerts über der Drehzahl zwischen 0,001/rpm und 0,005/rpm in einem Schlupfbereich bis 30 rpm. Die mittlere Schlupfdrehzahl wird von einem Schlupfregler eingeregelt. Da Schlupf generell Reibungsverluste verursacht, welche in Form von Wärmeenergie abgeführt werden müssen, ist eine möglichst geringe mittlere Schlupfdrehzahl anzustreben. Günstig sind für den aktiv modulierten Schlupf mittlere Schlupfdrehzahlen kleiner gleich 30 rpm, besonders günstig kleiner gleich 10 rpm.

Der aktive Schlupf Mode 2 bringt vor allem im niedrigen und bis in den mittleren Drehzahlbereich eine deutliche Verbesserung der Entkopplung, verglichen mit dem bekannten Schlupf Mode 1. Dieser hat den Vorteil, des geringeren Aufwands bei der Regelung und bei der Betätigung der Schlupfkupplung. Insbesondere bei hoher Drehzahl und abhängig vom Schwingungsverhalten des Antriebsstrangs, kann in bestimmten Betriebszuständen für die DU-Entkopplung auch kein Schlupf notwendig sein.

Es ist somit sinnvoll, eine bedarfsorientierte Betriebsstrategie zu implementieren. Diese kann sich an folgendem Schema orientieren:

|  | Niedrige Drehzahl | Mittlere Drehzahl | Hohe Drehzahl |
|---|---|---|---|
| Hohe Last | Schlupf Mode 2 | Schlupf Mode 2 | Schlupf Mode 1 |
| Mittlere Last | Schlupf Mode 2 | Schlupf Mode 1 | kein Schlupf |
| Niedrige Last | Schlupf Mode 1 | kein Schlupf | kein Schlupf |

Besondere Betriebszustände, wie gangabhängig auftretende Schwingungsknoten, Anfahren oder Resonanzen, sind dabei ebenfalls zu berücksichtigen.

Bezugszeichen

| 1 | Drehmomentübertragungsanordnung |
|---|---|
| 2 | Primärmasse |
| 3 | Zwischenmasse |
| 4 | Sekundärmasse |
| 6 | Tilgereinheit / drehzahladaptiver Tilgereinheit / variabler drehzahlfester Tilgereinheit / Tilger |
| 7 | Getriebeeingangswelle |
| 10 | 1. Federsatz / Torsionsdämpfer / Zweimassenschwungrad |
| 15 | Drehschwingungsdämpfungseinheit |
| 20 | 2. Federsatz Torsionsdämpfer / Zweimassenschwungrad |
| 25 | Eingangsbereich |
| 30 | Schlupfanordnung /Schlupfkupplung / schlupffähige Kupplung |
| 31 | Eingangsteil Schlupfanordnung |
| 32 | Ausgangsteil Schlupfanordnung |
| 33 | Getriebeeinheit |

| 35 | Ausgangsbereich |
| 40 | externe Aktivierung |
| 45 | externe Aktivierung |
| 72 | Wandlerüberbrückungskupplung |
| 100 | Getriebeeingangswelle |
| M | Drehmomentweg |
| Mm | mittleres Drehmoment |
| Mw | überlagertes Wechselmoment |
| ne | Eingangsdrehzahl |
| na | Ausgangsdrehzahl |
| nm | mittlere Drehzahl |
| ns | Drehzahlschlupf |
| newp | überlagerter Wechselanteil |
| newp_i | periodische Schwingungen |
| newp_i_Min | Minimum einer periodischen Schwingung |
| newp_i_Max | Maximum einer periodischen Schwingung |
| A | Drehachse |
| B | Drehachse |

**Patentansprüche**

1. Verfahren zur Übertragung und zur Dämpfung eines mittleren Drehmomentes (Mm) mit einem überlagerten Wechselmoment (Mw), in einer Drehmomentübertragungsanordnung (1) für einen Antriebsstrang eines Kraftfahrzeugs, umfassend einen um eine Drehachse (A) drehbaren Eingangsbereich (25) und einen um eine Drehachse (B) drehbaren Ausgangsbereich (35), wobei das mittlere Drehmoment (Mm) mit dem überlagerten Wechselmoment (Mw) entlang eines Drehmomentweges (M) von dem Eingangsbereich (25) zu dem Ausgangsbereich (35) übertragen wird, wobei der Eingangsbereich (25) der Drehmomentübertragungsanordnung (1) mit einer Eingangsdrehzahl (ne) um die Drehachse (A) und der Ausgangsbereich (35) der Drehmomentübertragungsanordnung mit einer Ausgangsdrehzahl (na) um die Drehachse (B) rotiert, wobei sich zumindest die Eingangsdrehzahl (ne) aus einer mittleren Drehzahl (nem) und einem überlagerten Wechselanteil (newp) zusammensetzt, wobei der Wechselanteil (new) näherungsweise durch eine Überlagerung periodischer Drehzahlschwingungen (newp_i) beschrieben werden kann, deren Frequenzen (f) im We-sentlichen in einem ganzzahligen Verhältnis (i) zur Zündfrequenz (Zf) stehen, wobei jede dieser periodischen Schwingungen (newp_i) ein Minimum (newp_i_Min) und ein Maximum (newp_i_Max) aufweist, wobei eine Schlupfanordnung (30) im Drehmomentweg (M) zwischen dem Eingangsbereich (25) und dem Ausgangsbereich (35) zur Übertragung des mittleren Drehmomentes (Mm) mit dem überlagerten Wechselmoment (Mw) und zur Erzeugung eines Drehzahlschlupfes (ns) zwischen der Drehzahl ne und der Drehzahl na im Drehmomentweg (M) vorgesehen ist,
**dadurch gekennzeichnet,**
**dass** die Schlupfanordnung (30) im Bereich der Maxima (newp_i_Max) zumindest eines periodischen Schwingungsanteils (newp_i) des Wechselanteils (newp) ein Maximum einer externen Aktivierung (40) des Drehzahlschlupfes (ns) und im Bereich der Minima (newp_i_Min) zumindest eines periodischen Schwingungsanteils (newp_i) des Wechselanteils (newp) ein Minimum einer externen Aktivierung (45) des Drehzahlschlupfes (ns) vorsieht.

2. Verfahren nach Anspruch 1, **dadurch gekennzeichnet, dass** die externe Aktivierung (40; 45) der Schlupfanordnung (30) von einem hydraulischen Aggregat erfolgt.

3. Verfahren nach Anspruch 1, **dadurch gekennzeichnet, dass** die externe Aktivierung (40; 45) der Schlupfanordnung (30) von einem elektrischen Aggregat erfolgt.

4. Verfahren nach einem der Ansprüche 1 bis 3, **dadurch gekennzeichnet, dass** die externe Aktivierung (40; 45) geeignet ist, an der Schlupfanordnung (30) einen Modulationsbereich von 23 bis 50 Hz oder einen Bereich von 33 bis 66 Hz oder einen Bereich von 50 bis 100 Hz vorzusehen.

5. Verfahren nach einem der Ansprüche 1 bis 4, **dadurch gekennzeichnet, dass** die Schlupfanordnung (30) als ein Anfahrelement verwendet wird..

6. Verfahren nach einem der Ansprüche 1 bis 4, **dadurch gekennzeichnet, dass** zusätzlich zu der Schlupfanordnung (30) ein Anfahrelement vorgesehen ist.

**7.** Verfahren nach einem der Ansprüche 5 oder 6, **dadurch gekennzeichnet, dass** die Schlupfanordnung (30) und/ oder das Anfahrelement als eine Reibkupplung, oder als eine Lamellenkupplung, oder als eine hydrodynamische Kupplung, oder als eine Trennkupplung in Hybridantrieben, oder als eine Doppelkupplung oder eine Triplekupplung ausgeführt, oder als eine Kupplung oder Bremse in Verbindung mit einem Planetengetriebe ausgeführt ist.

**8.** Verfahren nach einem der Ansprüche 1 bis 7, **dadurch gekennzeichnet, dass** die Drehachse (A) und die Drehachse (B) koaxial verlaufen oder dass die Drehachse (A) und die Drehachse (B) versetzt verlaufen.


**Claims**

**1.** Method for transmitting and for damping an average torque (Mm) with a superimposed alternating torque (Mw) in a torque transmission arrangement (1) for a drive train of a motor vehicle, having an input region (25) which can rotate about a rotational axis (A) and an output region (35) which can rotate about a rotational axis (B), wherein the average torque (Mm) is transmitted with the superimposed alternating torque (Mw) along a torque path (M) from the input region (25) to the output region (35), wherein the input region (25) of the torque-transmission arrangement (1) rotates with an input rotational speed (ne) about the rotational axis (A), and the output region (35) of the torque-transmission arrangement rotates with an output rotational speed (na) about the rotational axis (B), wherein at least the input rotational speed (ne) is composed of an average rotational speed (nem) and a superimposed alternating component (newp), wherein the alternating component (new) can be described approximately by means of a superimposition of periodic rotational speed oscillations (newp_i) whose frequencies (f) are essentially in an integral relationship (i) with the ignition frequency (Zf), wherein each of these periodic oscillations (newp_i) has a minimum value (newp_i_Min) and a maximum value (newp_i_Max), wherein a slip arrangement (30) in the torque path (M) between the input region (25) and the output region (35) is provided for transmitting the average torque (Mm) with the superimposed alternating torque (Mw) and for generating rotational speed slip (ns) between the rotational speed ne and the rotational speed na in the torque path (M),
**characterized**
**in that** the slip arrangement (30) provides a maximum value of external activation (40) of the rotational speed slip (ns) in the region of the maximum values (newp_i_Max) of at least one periodic oscillation component (newp_i) of the alternating component (newp), and a minimum value of external activation (45) of the rotational speed slip (ns) in the region of the minimum values (newp_i_Min) of at least one periodic oscillation component (newp_i) of the alternating component (newp).

**2.** Method according to Claim 1, **characterized in that** the external activation (40; 45) of the slip arrangement (30) is carried out by a hydraulic assembly.

**3.** Method according to Claim 1, **characterized in that** the external activation (40; 45) of the slip arrangement (30) is carried out by an electrical assembly.

**4.** Method according to one of Claims 1 to 3, **characterized in that** the external activation (40; 45) is suitable for providing a modulation range from 23 to 50 Hz or a range from 33 to 66 Hz or a range from 50 to 100 Hz at the slip arrangement (30).

**5.** Method according to one of Claims 1 to 4, **characterized in that** the slip arrangement (30) is used as a starter element.

**6.** Method according to one of Claims 1 to 4, **characterized in that** a starter element is provided in addition to the slip arrangement (30).

**7.** Method according to one of Claims 5 and 6, **characterized in that** the slip arrangement (30) and/or the starter element are/is embodied as a friction clutch or as a multi-disc clutch or as a hydrodynamic clutch or as a clutch in hybrid drives or as a double clutch or as a triple clutch, or as a clutch or brake in conjunction with a planetary gear mechanism.

**8.** Method according to one of Claims 1 to 7, **characterized in that** the rotational axis (A) and the rotational axis (B) extend coaxially, or **in that** the rotational axis (A) and the rotational axis (B) extend in an offset fashion.

**Revendications**

1. Procédé de transfert et d'amortissement d'un couple moyen (Mm) avec un couple alterné superposé (Mw), dans un agencement de transfert de couple (1) pour une chaîne cinématique d'un véhicule automobile, comprenant une plage d'entrée (25) pouvant tourner autour d'un axe de rotation (A) et une plage de sortie (35) pouvant tourner autour d'un axe de rotation (B), le couple moyen (Mm) étant transmis avec le couple alterné superposé (Mw) le long d'une trajectoire de couple (M) depuis la plage d'entrée (25) jusqu'à la plage de sortie (35), la plage d'entrée (25) de l'agencement de transfert de couple (1) tournant avec une vitesse de rotation d'entrée (ne) autour de l'axe de rotation (A) et la plage de sortie (35) de l'agencement de transfert de couple tournant avec une vitesse de rotation de sortie (na) autour de l'axe de rotation (B), au moins la vitesse de rotation d'entrée (ne) étant constituée d'une vitesse moyenne (nem) et d'une proportion alternée superposée (newp), la proportion alternée (newp) pouvant être décrite approximativement par une superposition d'oscillations de vitesses de rotation périodiques (newp_i), dont les fréquences (f) sont essentiellement dans un rapport entier (i) par rapport à la fréquence d'allumage (Zf), chacune de ces oscillations périodiques (newp_i) présentant un minimum (newp_i_Min) et un maximum (newp_i_Max), un agencement de patinage (30) étant prévu dans la trajectoire de couple (M) entre la plage d'entrée (25) et la plage de sortie (35) pour le transfert du couple moyen (Mm) avec le couple alterné superposé (Mw) et pour générer un patinage de vitesse de rotation (ns) entre la vitesse de rotation ne et la vitesse de rotation na dans la trajectoire de couple (M),
**caractérisé en ce que** l'agencement de patinage (30), dans la plage des maximums (newp_i_Max) d'au moins une proportion d'oscillations périodiques (newp_i) de la proportion alternée (newp), prévoit un maximum d'une activation externe (40) du patinage de vitesse (ns) et dans la plage des minimums (newp_i_Min) d'au moins une proportion d'oscillations périodiques (newp_i) de la proportion alternée (newp), prévoit un minimum d'une activation externe (45) du patinage de vitesse de rotation (ns).

2. Procédé selon la revendication 1, **caractérisé en ce que** l'activation externe (40 ; 45) de l'agencement de patinage (30) est effectuée par un groupe hydraulique.

3. Procédé selon la revendication 1, **caractérisé en ce que** l'activation externe (40 ; 45) de l'agencement de patinage (30) est effectuée par un groupe électrique.

4. Procédé selon l'une quelconque des revendications 1 à 3, **caractérisé en ce que** l'activation externe (40 ; 45) est appropriée pour prévoir, au niveau de l'agencement de patinage (30), une plage de modulation de 23 à 50 Hz ou une plage de 33 à 66 Hz ou une plage de 50 à 100 Hz.

5. Procédé selon l'une quelconque des revendications 1 à 4, **caractérisé en ce que** l'agencement de patinage (30) est utilisé en tant qu'élément de démarrage.

6. Procédé selon l'une quelconque des revendications 1 à 4, **caractérisé en ce qu'**en plus de l'agencement de patinage (30), on prévoit un élément de démarrage.

7. Procédé selon l'une quelconque des revendications 5 ou 6, **caractérisé en ce que** l'agencement de patinage (30) et/ou l'élément de démarrage sont réalisés sous la forme d'un embrayage à friction, ou d'un embrayage à disques, ou sous la forme d'un embrayage hydrodynamique ou sous la forme d'un embrayage de séparation dans des entraînements hybrides, ou sous la forme d'un double embrayage ou d'un triple embrayage, ou sous la forme d'un embrayage ou d'un frein en association avec un engrenage planétaire.

8. Procédé selon l'une quelconque des revendications 1 à 7, **caractérisé en ce que** l'axe de rotation (A) et l'axe de rotation (B) s'étendent coaxialement ou **en ce que** l'axe de rotation (A) et l'axe de rotation (B) s'étendent de manière décalée.

Fig.1

Fig. 2

# Fig. 3

Umgelenktes Moment HAG Volllast

Umgelenktes Moment in Motorhauptordnung [Nm]

Motordrehzahl [U/min]

Fig.4

# Fig. 5

| Motor | DU-Vorentkopplung | schlupffähige Kupplung | Getriebe | Restlicher Antriebsstrang |
|---|---|---|---|---|

# Fig. 6

# Fig. 7

Umgelenktes Moment HAG Volllast

Umgelenktes Moment in Motorhauptordnung [Nm]

Motordrehzahl [U/min]

Fig. 8

Fig. 9

Fig. 10

Fig. 11

$F_a$

$\alpha$

Fig. 12

$F_a$

$\alpha$

Fig. 13

$F_a$

$\alpha$

Spalte 1                    Spalte 2                    Spalte 3

Zeile 1

Zeile 2

Zeile 3

Fig. 14

Fig. 15

**Reibwertverlauf**

Reibwert μ [-]

tatsächliche Schlupfdrehzahl [U/min]

# Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008009135 A1